# EUROPEAN PATENT APPLICATION

(11) **EP 3 425 259 A1**
(43) Date of publication of application: **09.01.2019**
(21) Application number: 17759986.7
(22) Date of filing: 28.02.2017
(51) Int. Cl.: F17C 1/06, F16J 12/00, B29K 105/08, B29L 22/00

(54) **PRESSURE CONTAINER AND HOOP-WRAP COMPOSITE PRESSURE CONTAINER**

(30) Priority: 01.03.2016 JP 2016039473
(71) Applicant: The Japan Steel Works, Ltd., Tokyo 141-0032 (JP)
(72) Inventor: WADA Yoru, Muroran-shi Hokkaido 051-8505 (JP); SATO Shinya, Muroran-shi Hokkaido 051-8505 (JP)
(74) Representative: Grünecker Patent- und Rechtsanwälte PartG mbB
(86) International application number: PCT/JP2017/007751
(87) International publication number: WO 2017/150520

(57) **Abstract**

A hoop-wrap composite pressure container (1A) in which a dome part of a container body (1), having greater thickness than a cylindrical part (2), is shaped such that an outer peripheral curved surface starting point (30A), which is outward in an axial direction from an outside-diameter surface (20) that is flat in the axial direction in the container body, is offset farther outward in the axial direction than an inner peripheral curved surface starting point (31A), which is outward in the axial direction from an inside-diameter surface (21) that is flat in the axial direction in the container body, and FRP (10) is appropriately wound in hoops around the container body.

## Description

### Technical Field

The present invention relates to a pressure vessel and a hoop wrapped composite pressure vessel for storing high pressure gas. The invention can preferably be applied to, for example, storage and transportation of high pressure hydrogen and an accumulator vessel used at a hydrogen station.

### Background Art

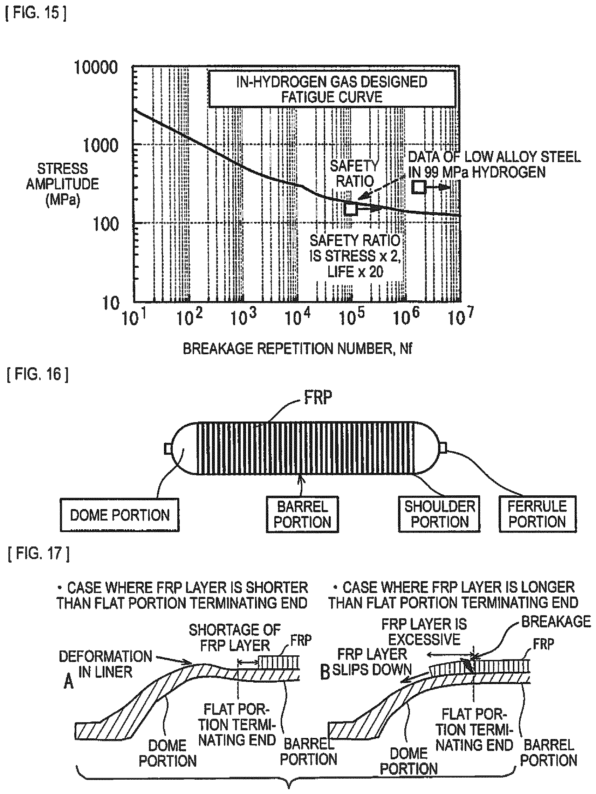

A hoop wrapped composite pressure vessel is known as a vessel for storing high pressure gas. A hoop wrapped composite pressure vessel has a structure in which a fiber reinforced plastic (hereinafter, referred to as FRP) is wound around a steel liner barrel portion having dome portions in a circumferential direction as shown in Fig. 16. The hoop wrapped composite pressure vessel is a type of vessel in which FRP is wound around the barrel portion to shoulder portions with the dome portions left unwrapped with FRP. The steel liner barrel portion is a vessel (a so-called bomb) made of a Mannesmann-type or an Ehrhardt-type seamless steel pipe, and both end portions are squeezed. The dome portions each have a ferrule portion.

In this hoop wrapped composite pressure vessel, since FRP only has to be wrapped around only the steel liner barrel portion, the hoop wrapped composite pressure vessel can be fabricated easily at low cost. Thus, such hoop wrapped composite pressure vessels are often used as a vessel for a natural gas-fuel led motor vehicle. The hoop wrapped composite pressure vessels are used generally under a pressure of the order of 20 MPa. However, when used as an accumulator vessel for a hydrogen station, it is assumed that hoop wrapped composite pressure vessels accumulate ultra-high pressure hydrogen of 40 MPa or greater to about 106 MPa or smaller. Further, it is assumed that the hoop wrapped composite pressure vessels are used under an environment where the number of times of loading hydrogen gas in fuel cell motor vehicles that run on hydrogen gas becomes about 300 thousand times for 15 years.

### Citation List

### Non-Patent Literature

NPL 1: Design Analysis of FRP Composite Vessels, Second Issue: Effects of Hoop Winding End Positions on Strain Distribution and Safety of Vessel, JHPJ Vol. 37 No. 5, 1999, P299 to P305
NPL 2: Japan Research and Development Center for Metals, WE-NET Takamatsu Hydrogen Station Equipment Demolition Study Report, P99, March, 2008
NPL 3: Performance Report from Fiscal Year of 2008 to Fiscal Year of 2012, Hydrogen Production, Transportation and Storage System Technology Development, Research and Development of Hydrogen Station Equipment Element Technology, Research and Development of Low-Cost 70 MPa Class Hydrogen Gas Loading Station Equipment, P202 to P204
NPL 4: http://www.meti.go.jp/policy/safety_security/industrial_safety/oshirase/2015/02/27020 9-1.html
NPL 5: The American Society for Mechanical Engineers: ASME Section VIII Division I, Figure UG-34 Some Acceptable Types of Unstayed Flat Heads and Covers, 2013
NPL 6: Koatsu Gas Hoan Kyokai (High Pressure Gas Safety Society), Standard for Ultra-high Pressure Gas Equipment KHK S0220 (2010), 2010
NPL 7: https://www.mhi.cojp/technology/review/pdf/312/312155.pdf

### Summary of Invention

### Technical Problem

However, when the conventional hoop wrapped composite pressure vessel is applied to such a hydrogen accumulator vessel, as will be described below, there is a problem in that the dome portions are not strong enough for such an application.

1) Fig. 16 is a schematic drawing showing a conventional hoop wrapped composite pressure vessel like the one described above. Fig. 17 shows diagrams illustrating a problem with a dome portion of the conventional hoop wrapped composite pressure vessel and are enlarged views of a shoulder portion shown in Fig. 16. Fig. 17A shows a case where an FRP layer is short and does not reach a terminating end of a flat portion, and Fig. 17B shows a case where the FRP layer is long and extends beyond the term inating end portion of the flat portion.

The hoop wrapped composite pressure vessel is the type of vessel in which an FRP is wound around only the barrel portion as described above. Due to this, as shown in Fig. 17A, it is pointed out that in the event that the FRP is not wrapped enough to reach the terminating end of the flat portion, the barrel portion is exposed, and high stress tends to be easily concentrated at the exposed barrel portion, whereby the hoop wrapped composite pressure vessel becomes easy to fail (refer to NPL 1). On the contrary, as shown in Fig. 17B, in the event that the FRP is wound around too much to extend beyond a boundary (the terminating end of the flat portion) between the barrel portion and the dome portion towards the dome portion, the FRP slips down along the dome portion, whereby the FRP portion fails or a crack is generated in the FRP portion. In an actual ERP winding operation, it is difficult to wind an FRP around the barrel portion so that a terminating end of the FRP is positioned accurately (in the order of a size of a bundle of fibers to be wound around) on an edge of the terminating end of the flat portion. Thus, the FRP is wound either long or short.

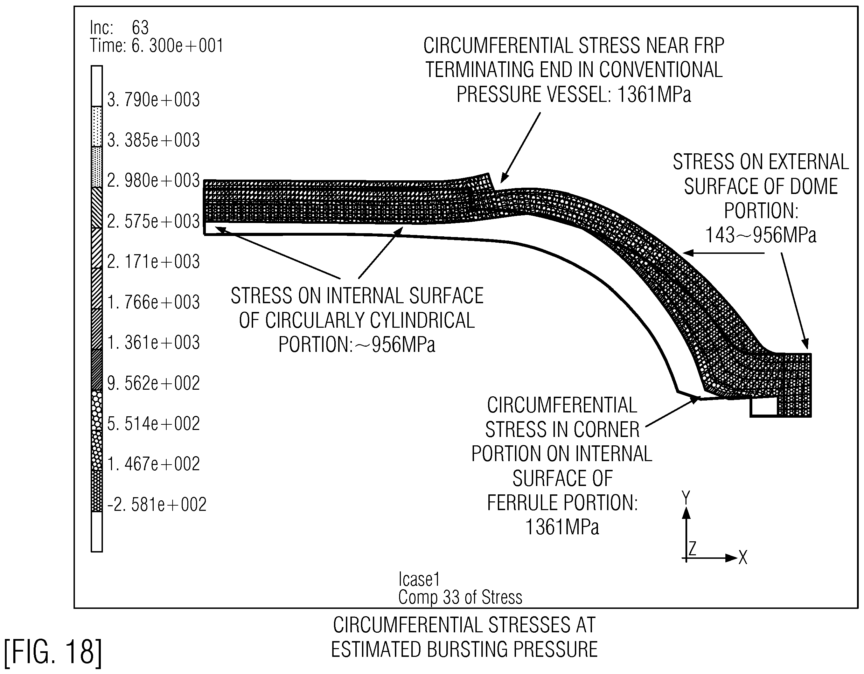

Fig. 18 shows an example of a stress analysis carried on the conventional hoop wrapped composite pressure vessel around which the FRP is wound at a portion situated near the dome portion. It is seen from Fig. 18 that a high stress is generated at a corner portion of an inner surface of a ferrule portion and that a doom portion bulges greatly at a portion situated near an edge of a terminating end of a flat portion. Thus, it is understood that in the event that an FRP is wound short even a little, there is a risk of the hoop wrapped composite pressure vessel rupturing at the portion around which the FRP is not wound.

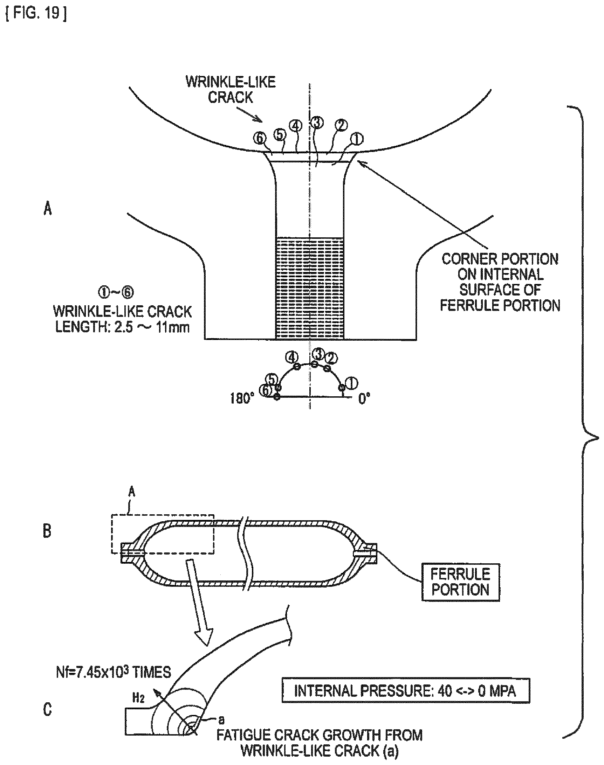

Additionally, in a general vessel having a dome portion, a ferrule portion like one shown in Fig. 16 is formed by working the dome portion through forging to produce a neck portion, so that a lid of the vessel is screwed into the ferrule portion so formed. However, as shown in Fig. 18, the high stress is generated at the corner portion of the inner surface of the ferrule portion.
2) Further, wrinkle-like cracks are generated at portions I to 6 shown in Fig. 19A in the corner portion of the inner surface of the ferrule portion. Angular positions or the portions I to 6 relative to an inside diameter of the ferrule portion are shown at a lowest portion of Fig. 19A. Fig. 19B is a sectional view of the whole of the pressure vessel, and Fig. 19A is an enlarged sectional view of the ferrule portion. Fig. 19C shows how a fatigue crack grows from a wrinkle-like crack of a depth a (mm) in hydrogen at a portion A in Fig. 19B and a fatigue breaking life (Nf) in hydrogen,

These wrinkle-like cracks are also pointed out in NPLs 2 and 3. Low alloy steel is used as a material for use for a liner of a hoop wrapped composite pressure vessel. It is generally known that low alloy steel becomes brittle due to hydrogen in a high pressure hydrogen gas. Because of this, when such a crack exists, there is a risk of the crack growing easily to break the hoop wrapped composite pressure vessel.
3) NPL 2 reports the results of the study on the demolishment of a low alloy steel accumulator vessel having a ferrule portion. According to the results of the study, it is pointed out that a highest stress is generated at a corner portion of an inner surface of the ferrule portion in the whole of the accumulator vessel, reducing a fatigue crack
growth life of the accumulator vessel in a hydrogen gas. 4) In fact, with hydrogen accumulator vessels having a ferrule portion, there has been reported an accident in which an accumulator vessel is broken due to hydrogen brittleness that is triggered as a result of incomplete removal of cracks at a dome portion (refer to NPL 4).
5) With a hydrogen station accumulator vessel, it is necessary to remove wrinkle-like cracks on an inner surface of a ferrule portion or to inspect an inner surface of a dome portion for wrinkle-like cracks or to confirm whether or not a wrinkle-like crack remains thereon. Generally, there is a wide variety of hydrogen station accumulator vessels having a volumetric capacity approximately from 50 L to 300 L. In these hydrogen station accumulator vessels, a ferrule portion is constricted to have a small opening diameter that generally ranges from φ30 to of the order of 40 mm. This makes it difficult to remove wrinkle-like cracks generated in the dome portion including the corner portion of the inner surface of the ferrule portion by inserting a tool or a hand from the opening portion of φ30 to of the order of 40 mm, to inspect directly the dome portion for wrinkle-like cracks or to verify whether or not a wrinkle-like crack exists in the dome portion with an inspection mirror through the opening portion. It is difficult to increase the opening diameter in terms of strength.

In this way, with the conventional hoop wrapped composite pressure vessels, there is a problem in that the strength at the shoulder portion of the dome portion and the ferrule portion where the FRP is not wound becomes insufficient.

The invention has been made in view of these situations and one of objects of the invention is to provide a hoop wrapped composite pressure vessel which facilitates an improvement in strength at a dome portion and a winding of FRP and a hoop wrapped composite pressure vessel which is highly strong at a dome portion and around which FRP is wound properly.

### Solution to Problem

The object of the invention is achieved by the following configurations.
(1) A pressure vessel in which a fiber reinforced plastic is wound like a hoop around a vessel main body having a circularly cylindrical portion that is closed at both ends thereof, the pressure vessel comprising:
   a dome portion provided to at least one end οf the vessel main body,
   wherein the dome portion has a thickness that is greater than a thickness of the circularly cylindrical portion, and
   wherein the dome portion has a shape in which an outer circumferential curved surface initiating point that is situated axially outwards of an external diametrical surface of the vessel main body that is flat in an axial direction is offset further axially outwards than an inner circumferential curved surface initiating point that is situated axially outwards of an internal diametrical surface of the vessel main body that is flat in the axial direction.
(2) The pressure vessel according to the above (1), wherein the dome portion has a thickness increasing area where the thickness of the dome portion increases axially outwards from the inner circumferential curved surface initialing point.
(3) The pressure vessel according to the above (2), wherein the thickness increasing area exists at least within an angular range defined from 90 degrees to 45 degrees relative to an axial direction in an axially curved surface shape of an inner circumferential surface.
(4) The pressure vessel according to any one of the above (1) to (3), wherein an amount of the offset is at least 3% or more of an outside diameter of the circularly cylindrical portion.
(5) The pressure vessel according to any one of the above (1) to (4), wherein an amount of the offset is equal to or less than 12.3% of an outside diameter of the circularly cylindrical portion.
(6) The pressure vessel according to any one of the above (1) to (5),
   wherein the dome portion has an opening portion at a distal end thereof in the axial direction, and
   wherein the opening portion has a diameter of 70 mm or greater.
(7) The pressure vessel according to any one of the above (1) to (6),
   wherein the dome portion has an opening portion at a distal end thereof in the axial direction,
   wherein the opening portion has a diameter of 90 mm or smaller, and
   wherein a ratio of the opening portion to a diameter of an internal diametrical surface of the vessel main body that is flat in the axial direction is 3.6 or smaller.
(8) The pressure vessel according to any one of the above (1) to (7), wherein an external diametrical surface or the dome portion is not positioned further outer circumferentially than an external diametrical surface of the vessel main body that is flat in the axial direction.
(9) The pressure vessel according to any one of the above (1) to (8), wherein the external diametrical surface of the vessel main body that is flat in the axial direction is within a tolerance range of ± 0.1 mm.
(10) The pressure vessel according to any one of the above (1) to (9), wherein the circularly cylindrical portion of the vessel main body is a seamless steel pipe.
(11) The pressure vessel according to any one of the above (1) to (10), comprising an opening portion that has no ferrule portion at a distal end of the dome portion,
   wherein an openable and closable lid is held in the opening portion with a removable retainer ring.
(12) A hoop wrapped composite pressure vessel in which the fiber reinforced plastic is wound like a hoop around the external diametrical surface of the vessel main body according to any one of the above (1) to (11) that is flat in the axial direction, and wherein an axial end edge of the fiber reinforced plastic exceeds the inner circumferential curved surface initiating point to be positioned on an outer circumferential surface that is positioned before the outer circumferential curved surface initiating point and which extends along the external diametrical surface of the vessel main body that is flat in the axial direction.
(13) The hoop wrapped composite pressure vessel according to the above (12), wherein the axial end edge of the fiber reinforced plastic is positioned 1 mm or greater axially inwards of the outer circumferential curved surface initiating point.
(14) The hoop wrapped composite pressure vessel according to the above (12) or (13), having a durability to withstand 500 thousand times or more of repeated application of a load under repeated pressure fluctuating conditions in a high pressure hydrogen having a maximum pressure of 82 MPa and a minimum pressure of 35 MPa on the premise that a crack of a linear length of 1.0 mm or smaller and a depth of 0.3 mm or smaller exists on an internal surface of the dome portion.

### Advantageous Effect of Invention

According to the invention, it is possible to solve the problem in that the dome portion is not strong enough. Additionally, it becomes easy to hoop the pressure vessel with the FRP in a proper fashion. Further, it is possible to remove wrinkles and flaws. Furthermore, it is possible to provide the opening portion having the size that facilitates an inspection. Further, it is possible to ensure the safety of the pressure vessel as its service life in hydrogen that corresponds to up to at least 500 thousand times of loading of hydrogen, thereby making it possible to contribute to the safety and spread of hydrogen stations.

### Brief Description of Drawings

Fig. 1A is a sectional view showing part of a pressure vessel according to an embodiment of the invention, and Fig. 1B is a sectional view showing part of a hoop wrapped composite pressure vessel according to the embodiment of the invention.
Fig. 2 is a partially enlarged view of the hoop wrapped composite pressure vessel according to the embodiment of the invention showing a dome portion and a circumference thereof.
Fig. 3 shows partially sectional views showing test samples of hoop wrapped composite pressure vessels used to describe examples of the invention and a test sample used as a comparison example, in which Fig. 3A is a partially sectional view of a conventional shape 1, Fig. 3B is a partially sectional view of a shape 2 in which an L offset is 50 mm, and Fig. 3C is a partially sectional view of a shape 3 in which an L offset is 100 mm.
Fig. 4 is a drawing showing a change in thickness of the dome portion of the hoop wrapped composite pressure vessel according to the embodiment of the invention.
Fig. 5 is a drawing showing evaluation points on the hoop wrapped composite pressure vessel according to the embodiment of the invention where a stress analysis is carried out.
Fig. 6 is a graph showing a relationship between the thickness of the dome portion and a stress at the evaluation point B in an offset position of the hoop wrapped composite pressure vessel according to the embodiment of the invention.
Fig. 7 is a graph showing a relationship between an offset amount and a thickness of the dome portion at a terminating end or a flat outside diameter surface of the hoop wrapped composite pressure vessel according to the embodiment of the invention.
Fig. 8 shows graphs showing relationships between an offset ratio and a stress value according to the embodiment of the invention, in which Fig. 8A represents a stress at the evaluation point A, and Fig. 8B represents a stress at the evaluation point B.
Fig. 9 is a graph showing a relationship between thicknesses of the dome portion at offset positions and stresses generated at the evaluation point A in the hoop wrapped composite pressure vessel according to the embodiment of the invention.
Fig. 10 is a drawing showing dome-shaped test samples for use in analysis of a change in opening diameter of an opening portion of the hoop wrapped composite pressure vessel according to the embodiment of the invention.
Fig. 11 is a drawing showing a test sample of the hoop wrapped composite pressure vessel according to the embodiment of the invention that has an openable and closable lid of a retainer ring type for use for an inner surface crack inspection.
Fig. 12 is a flow chart showing a fatigue crack life evaluation procedure for the hoop wrapped composite pressure vessel according to the embodiment of the invention that takes a high pressure hydrogen gas environment into consideration.
Fig. 13 is a drawing showing in-hydrogen gas fatigue crack growth data for use for the evaluation procedure shown in Fig. 12.
Fig. 14 shows drawings showing assumed crack inserting positions of test samples for use for fatigue growth life calculation in an example of the invention, in which Fig. 14(a) represents a shape 1, Fig. 14(b) represents a shape 2, Fig. 14(c) represents a shape 4, and Fig. 14(d) represents a shape 5.
Fig. 15 is a graph showing a relationship between the number of times of repeating of breakage (Nf) and stress amplitude for use in calculating a fatigue life in the example of the invention.
Fig. 16 is a schematic drawing showing a conventional hoop wrapped composite pressure vessel.
Fig. 17 shows drawings illustrating a problem with a dome portion of the conventional hoop wrapped composite pressure vessel, in which Fig. 17A shows a case where an FRP layer is too short to reach a terminating end of a flat portion, and Fig. 17B shows a case where the FRP layer is so long that the FRP layer extends beyond the terminating end of the flat portion.
Fig. 18 is a drawing showing an example of a stress analysis at a portion near the dome portion of the conventional hoop wrapped composite pressure vessel.
Fig. 19 shows drawings an example in which cracks are generated in the conventional hoop wrapped composite vessel, in which Fig. 19A is an enlarged sectional view of a ferrule portion, Fig. 19B is a sectional view of the whole of the hoop wrapped composite pressure vessel, and Fig. 19C is a drawing showing how a fatigue crack grows from a wrinkle-like crack of a depth of a (mm) in hydrogen at a portion A shown in Fig. 19B and a fatigue breaking life (Nf) in hydrogen.

### Description of Embodiments

Hereinafter, an embodiment of the invention will be described based on the accompanying drawings.

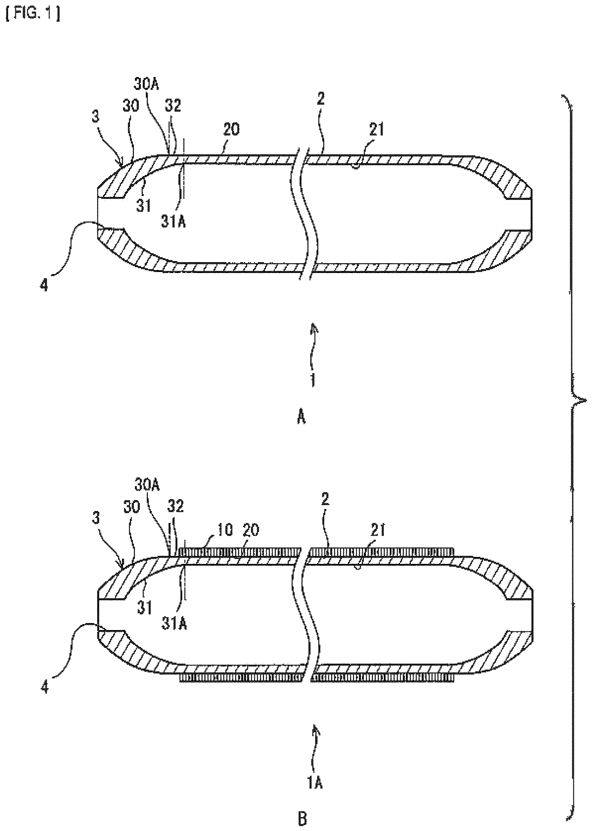

Fig. 1A is a sectional view showing part of a pressure vessel 1 according to an embodiment of the invention, and Fig. 1B is a sectional view showing part of a hoop wrapped composite pressure vessel 1A according to the embodiment of the invention.

The pressure vessel 1 includes a circularly cylindrical portion 2 that is made up of a seamless steel pipe and has a dome portion 3 formed at each end of the circularly cylindrical portion 2, and an opening portion 4 is provided at a distal end of each dome portion 3. An openable and closable lid, not shown, is fixed to the opening portion 4 using a retainer ring method. The seamless steel pipe is made of a material such as carbon steel or low alloy steel and can be fabricated using such a method as the Mannesmann or Ehrhardt method.

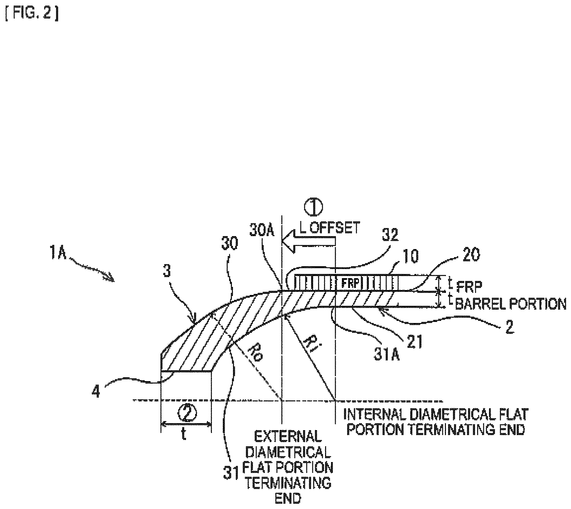

Fig. 2 is an enlarged view showing a dome portion 3 and a part of a circularly cylindrical portion 2 of the hoop wrapped composite pressure vessel 1A in which an FRP 10 is wound around the pressure vessel 1.

The circularly cylindrical portion 2 has an internal diametrical surface 21 that is flat in an axial direction and an external diametrical surface 20 that is flat in the axial direction.

A dome portion 3 is formed at each end of the circularly cylindrical portion 2 through drawing, and an opening portion 4 is formed at a distal end of each of the dome portions 3, 3 through molding.

In the circularly cylindrical portion 2, axial ends of the external diametrical surface 20 that is flat in the axial direction and the internal diametrical surface 21 that is flat in the axial direction constitute terminating ends thereof, and the dome portions 3 are formed individually at the distal end sides of the external diametrical surface 20 and the internal diametrical surface 21. Then, the circularly cylindrical portion 2 continues to an inner circumferential curved surface initiating point 31A of a dome portion inner circumferential curved surface 31.

Additionally, an external diametrical surface 32 that is flat in an axial direction of the dome portion 3 is formed on the terminating ends of the external diametrical surface 20 that is flat in the axial direction of the circularly cylindrical portion 2 so as to follow the external diametrical surface 20 that is flat in the axial direction. Namely, in relation to an external shape of the dome portion 3, the external diametrical surface 32 that is flat in the axial direction extends as it is axially outwards from the terminating end of the circularly cylindrical portion 2. The outer circumferential curved surface initiating point 30A is positioned axially outwards of the inner circumferential curved surface initiating point 31A, and a dome portion outer circumferential curved surface 30 is positioned axially outwards of the outer circumferential curved surface initiating point 30A.

An axial deviating amount of the inner circumferential curved surface initiating point 31A and the outer circumferential curved surface initiating point 30A is shown as an L offset. Having the L offset widens a range of a flat portion on the external diametrical surface. Due to this, an operation of winding the FRP 10 around the circularly cylindrical portion 2 like a hoop is facilitated, and a more suitable range can be selected. As will be described later, providing the L offset enables the thickness of the dome portion 3 to be increased effectively.

In the invention, a length of the L offset is not limited to any specific range and hence should exceed 0. In theory, a minimum value of the L offset should be equal to or greater than one bundle of fibers in distance (for example, when the number of fibers per bundle is 24,000, the minimum value becomes of the order of about 7 µm). According to NPL 1, however, it is pointed out that when the end of the hoop wrapped area only changes by of the order of 1.5% of the outside diameter of the circularly cylindrical portion, the burst strength of the vessel is affected to be reduced remarkably. Due to this, it is desirable that a radio of the offset amount to the outside diameter of the circularly cylindrical portion (referred to as an offset ratio) is ensured to be 3% or more of the outside diameter of the circularly cylindrical portion in consideration of an error of positioning of a terminating end of a hoop wound or wrapped area in a hoop winding or wrapping operation.

In the invention, an upper limit of the L offset is not determined. Since a dome portion is generally formed of a pipe, in reality, it is difficult to increase partially the thickness of the dome portion, and in case it is really attempted so, it will involve high cost. Further, the stress reduction effect at the shoulder portion at the edge of the terminating end of the axial flat portion becomes saturated when the offset amount reaches of the order of 50 mm, it is desirable that the upper limit is set at 50 mm.

Consequently, the ratio of the offset amount to the outside diameter of the circularly cylindrical portion, that is, the offset ratio has an optimum upper limit value of 12.3%.

The dome portion 3 is thicker than the circularly cylindrical portion 2. The thickness of the dome portion 3 can be represented by a thickness defined in the direction of a center of curvature οf the dome portion inner circumferential curved surface 31. Increasing the thickness of the dome portion 3 prevents the pressure vessel 1 from bursting at a portion lying near a position where the FRP 10 terminates on the pressure vessel 1 due to a concentration of high stress at the portion.

It is desirable that the thickness of the dome portion 3 increases gradually axially outwards from the inner circumferential curved surface initiating point 31A. This is because locations where greater stress is exerted exist further towards a distal end side of the dome portion 3 than the inner circumferential curved surface initiating point 31A and the circularly cylindrical portion 2, the locations including the portion lying near the position where the FRP 10 terminates on the pressure vessel 1 and a point where a retainer ring, not shown, is brought into contact with a dome portion inner circumferential surface. It is desirable that a thickness increasing area where the thickness increases gradually continues in the direction of a radius of curvature of the inner circumferential surface from a portion that lies at right angles to the axial direction to a portion that lies at least 45 degrees relative to the axial direction. The reason is that even though the thickness of the dome portion is increased in an area that lies an angle of less than 45 degrees relative to the axial direction, there is provided almost no effect of reducing high stress that is generated at the portion lying near the position where the FRP 10 terminates on the pressure vessel 1 and the point where the retainer ring, not shown, is brought into contact with the dome portion inner circumferential surface.

The dome portion 3 has the opening portion 4 at the distal end side thereof. The opening portion 4 is sealed up by holding the openable and closable lid (not shown) in the opening portion 4 with the retainer ring. The openable and closable lid, not shown, can be removed from the opening portion 4 for an inner surface inspection or the like. The size of the opening portion 4 is not limited to any specific size in the invention. However, it is preferable that an opening diameter of the opening portion 4 is referred to as 70 mm or greater. Ensuring the opening of 70 mm or greater in diameter enables a crack inspection using a penetrant inspection method or a magnetic particle inspection method to be carried out directly from an internal surface side of a vessel main body. When the opening is small, the inspection has to be carried out from an external surface side, and this makes it difficult for an accurate inspection to be carried out On the contrary, when the opening is too large, a pressure bearing area is increased to thereby increase stress, and therefore, it is desirable that an upper limit of the opening diameter is set at 90 mm. When a ratio between an internal surface diameter and an external surface diameter (an internal and external diameters ratio) is constant and a ratio of the opening diameter to an internal surface diameter or an external surface diameter is the same, a stress distribution in a section of the vessel in a thickness direction becomes the same. Consequently, it is desirable that a ratio of the opening diameter to the diameter of the internal diametrical surface of the vessel main body that is flat in the axial direction is set at 3.6 or smaller.

The dome portion can be fabricated by using a seamless steel pipe that is given a sufficient thickness in advance in the area defined by the portion that is at right angles to the axial direction and the portion that lies at least 45 degrees relative to the axial direction. The dome portion can be fabricated by forming an end portion of a seamless steel pipe into a dome shape through hot processing, applying heat treatments such as hardening and tempering to the dome-shaped portion and cutting an external surface of the dome-shaped portion as described in paragraphs 0029 to 0035. Alternatively, the dome portion can also be fabricated by hot processing a seamless steel pipe so that a required thickness can be ensured from the portion that is at right angles to the axial direction to the portion that lies at least 45 degrees relative to the axial direction, applying heat treatments such as hardening and tempering to the hot processed portion and cutting an external surface of the hot processed portion as described in paragraphs 0029 to 0035. A method of pressing a seamless steel pipe to a dome-shaped mold or a spinning forming method are raised as the hot processing method of the dome portion.

A fiber reinforced plastic (FRP) 10 is wound around the pressure vessel obtained as described above as a hoop. A method of winding the FRP 10 around the pressure vessel is not limited to any specific method, and hence, the FRP 10 can be wound around the pressure vessel as a hoop by a known method. The fiber reinforced plastic includes a carbon fiber reinforced plastic (CFRP) and a glass fiber reinforced plastic (GFRP), and either of the two fiber reinforced plastics may be used in this invention.

In particular, locating a terminating end position of the FRP 10 within a range defined between the inner circumferential curved surface initiating point 31A and the outer circumferential curved surface initiating point 30A enables the FRP 10 to be wound around the external diametrical surface 32 that is flat in an axial direction of the dome portion 3. Further, that enables the FRP 10 to be wound around to a position that lied axially outwards of the inner circumferential curved surface initiating point 31A. Winding the FRP 10 in these ways can improve the strength of the dome portion 3. This solves the problem in that the strength of the dome portion 3 becomes insufficient due to a shortage of winding length of the FRP 10 or the problem in that the fibers slip down over the dome portion 3 due to excessive winding of the FRP 10, whereby a risk of the FRP 10 being broken or cracked can be avoided. It is desirable from the viewpoint of ensuring the strength thereof that the FRP 10 is wound around the external diametrical surface 32 that is flat in the axial direction as axially outwards as possible. To avoid an excessive winding or the FRP 10, however, it is desirable that a terminating end of the FRP 10 is positioned inwards of an edge of a terminating end of the external diametrical surface 32 that is flat in the axial direction with a slight gap defined therebetween, and it is desirable that for example, a gap of 1 mm or greater is ensured.

Winding the FRP 10 around the pressure vessel 1 as a hoop can obtain a hoop wrapped composite pressure vessel 1A. This hoop wrapped composite pressure vessel 1A has such a durability that the hoop wrapped composite pressure vessel 1A bears 500 thousands or more times or application of a load repeatedly under repeated pressure fluctuating conditions between a maximum pressure of 82 MPa and a minimum pressure of 35 MPa in high pressure hydrogen gas, even though a crack whose linear length is 1.0 mm or smaller and depth is 0.3 mm or smaller exists on an inner circumferential surface of the hoop wrapped composite pressure vessel 1A that is brought into contact with high pressure hydrogen gas.

### Example 1

Next, an example of the invention will be described.

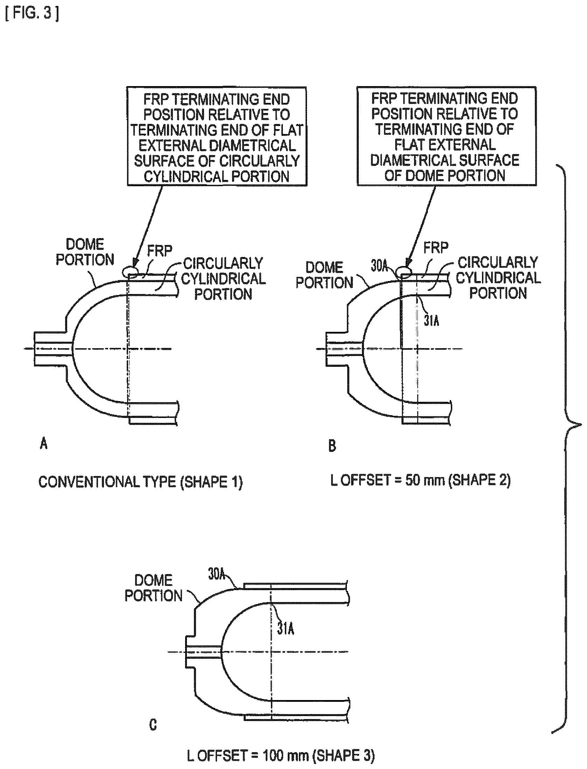

Fig. 3 shows partially sectional views of a hoop wrapped composite pressure vessel that is a sample for use in this example. Liners shown therein are all liners of a type having a ferrule like one shown in Fig. 16.

Fig. 3A shows a conventional sample in which an inner circumferential curved surface initiating point 31A and an outer circumferential curved surface initiating point 30A are coincide with each other in an axial direction at a dome portion. Fig. 3B shows a sample for use in the embodiment in which an outer circumferential curved surface initiating point 30A is offset by an offset amountof 50 mm from an inner circumferential curved surface initiating point 31A. Fig. 3C is a sample for use in the embodiment in which an outer circumferential curved surface initiating point 30A is offset by an offset amount of 100 mm from an inner circumferential curved surface initiating point 31A.

In all the samples, a circularly cylindrical portion 2 has an outside diameter of 406 mm, an inside diameter of 322 mm and a thickness of 42 mm, and an edge of a terminating end of an FRP 10 is positioned 5 mm inwards of the outer circumferential curved surface initiating point 30A. A thickness of the FRP 10 is 20 mm.

In the sample of Fig. 3A, a radius of curvature of a dome portion inner circumferential curved surface 31 is 161 mm, and a radius of curvature of a dome portion outer circumferential curved surface 30 is 203 mm. As to centers of curvatures, centers of curvatures of the inner and outer circumferential curved surface initiating points 31A, 30A coincide with each other. An inside diameter of an opening portion 4 is 38 mm, and an outside diameter and a length of a ferrule portion are 100 mm and 90 mm, respectively.

In the sample of Fig. 3B, a radius of curvature of a dome portion inner circumferential curved surface 31 is 161 mm, and a radius of curvature of a dome portion outer circumferential curved surface 30 is 203 mm. As to centers of curvatures, a center of curvature of the dome portion inner circumferential curved surface 31 is offset 50 mm outwards. An inside diameter of an opening portion 4 is 38 mm, and an outside diameter and a length of a ferrule portion are 100 mm and 65 mm, respectively.

In the sample of Fig. 3C, a radius of curvature of a dome portion inner circumferential curved surface 31 is 161 mm, and a radius of curvature of a dome portion outer circumferential curved surface 30 is 203 mm. As to centers of curvatures, a center of curvature of the dome portion inner circumferential curved surface is offset 100 mm outwards. An inside diameter of an opening portion 4 is 38 mm, and an outside diameter and a length of a ferrule portion are 100 mm and 27 mm, respectively.

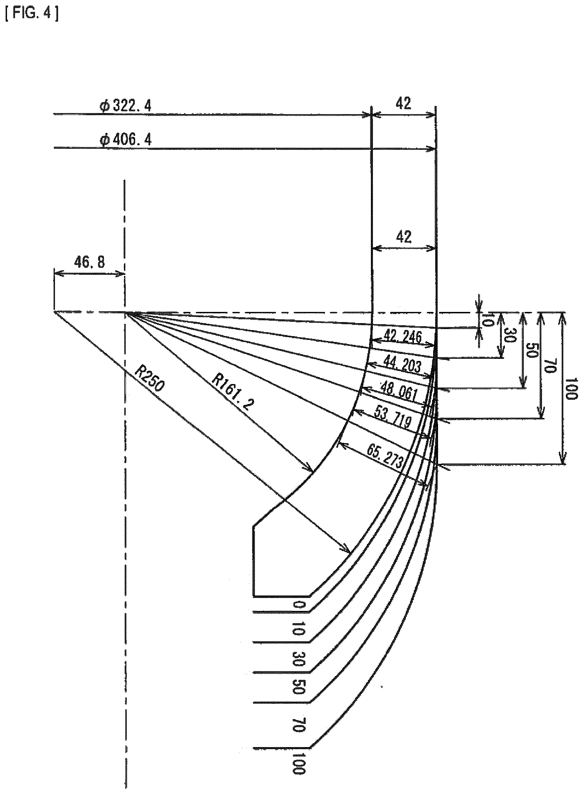

According to the samples shown in Figs. 3B, 3C, as shown in Fig. 4, a dome portion thickness at a terminating end portion of the FRP 10 is increased to be greater than a circularly cylindrical portion thickness, whereby a generation of high stress is prevented from occurring at the terminating end portion of the FRP 10, which prevents bursting at the terminating end portion of the FRP 10.

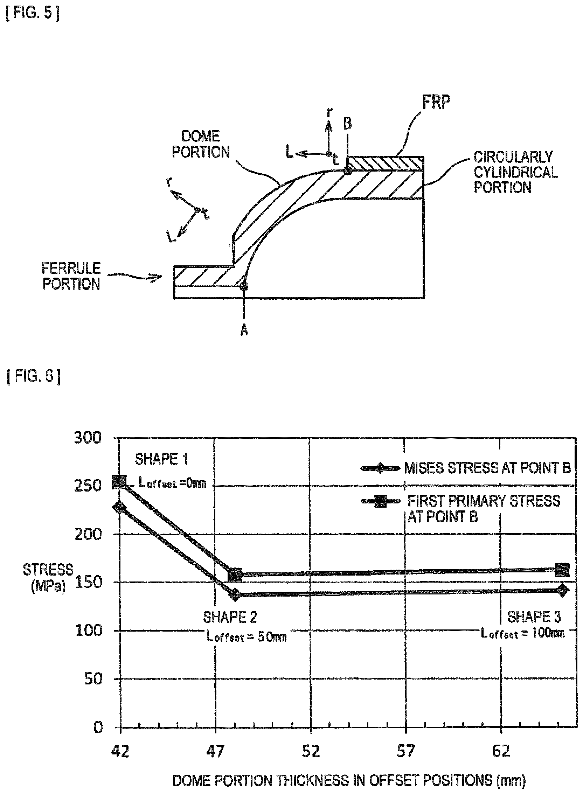

Fig. 5 shows evaluation points where a stress analysis is carried out on the samples. In the samples, a position where an edge of a terminating end of an FRP is located is determined to be a point B, and a corner portion on an internal surface of a ferrule portion is determined to be a point A.

In the samples, a radial stress σr, an axial stress σL, a circumferential stress σt, a first primary stress σ1, and a third primary stress σ3 were calculated using a finite element method, and values obtained through the calculations are shown in Tables 1 to 3 and Fig. 6.

**[Table 1]**

| Locations | A | B |
|---|---|---|
| σr | -65.4 | -3.6 |
| σL | -66.3 | 171.1 |
| σl | 471.4 | 254.0 |
| σL | -32.1 | -4.7 |
| σl | 471.4 | 254.0 |
| σ3 | -97.9 | -3.7 |
| σ Mises | 540.1 | 227.9 |

| | | |
|---|---|---|
| σ1 of Shape 1: First Primary Stress, σ Mises: Mises stress | | |

**[Table 2]**

| Locations | A | B |
|---|---|---|
| σr | -93.0 | -0.5 |
| σL | -62.6 | 84.5 |
| σl | 226.1 | 157.6 |
| σL | -13.0 | -4.8 |
| σl | 226.1 | 157.6 |
| σ3 | -97.9 | -0.8 |
| σ Mises | 306.0 | 137.3 |

| | | |
|---|---|---|
| σ1 of Shape 2: First Primary Stress, σ Mises: Mises stress | | |

**[Table 3]**

| Locations | A | B |
|---|---|---|
| σr | -95.6 | -0.2 |
| σL | -84.4 | 93.7 |
| σl | 242.9 | 162.5 |
| σL | 4.8 | -2.3 |
| σl | 242.9 | 162.5 |
| σ3 | -97.4 | -0.2 |
| σ Mises | 333.2 | 141.4 |

| | | |
|---|---|---|
| σ1 of Shape 3: First Primary Stress, σ Mises: Mises stress | | |

As is obvious from Tables 1 to 3 and Fig. 6, it is shown that stress values of Shapes 2, 3 become smaller than those of Shape 1 and that even though a terminating end of the FRP 10 is short by 5 mm, it is difficult for a concentration of stress to occur at the point B in the embodiment of the invention.

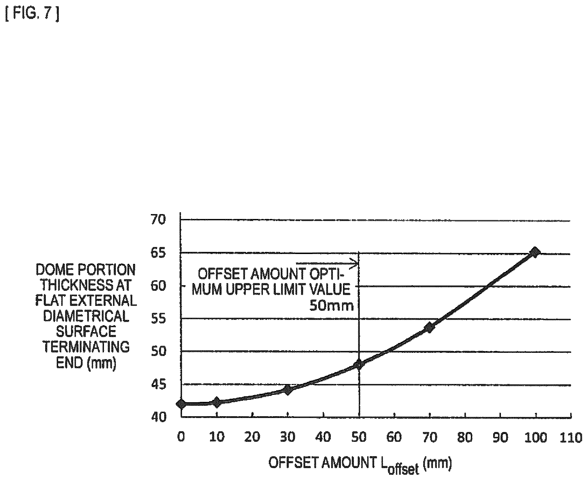

Fig. 7 shows a relationship between offset amounts and dome portion thicknesses at edges of terminating ends of the external diametrical surface 20 that is flat in the axial direction. The dome portion thickness at the edge of the terminating end of the external diametrical surface 20 that is flat in the axial direction increases as the offset amount increases. However, the stress reduction effect becomes saturated when the offset amount reaches 50 mm. A dome portion thickness then becomes 43.06 mm.

It is desirable that an upper limit value For the dome portion thickness is set at 50 mm since the stress reduction effect at the point B becomes saturated when the offset amount reaches of the order of 50 mm.

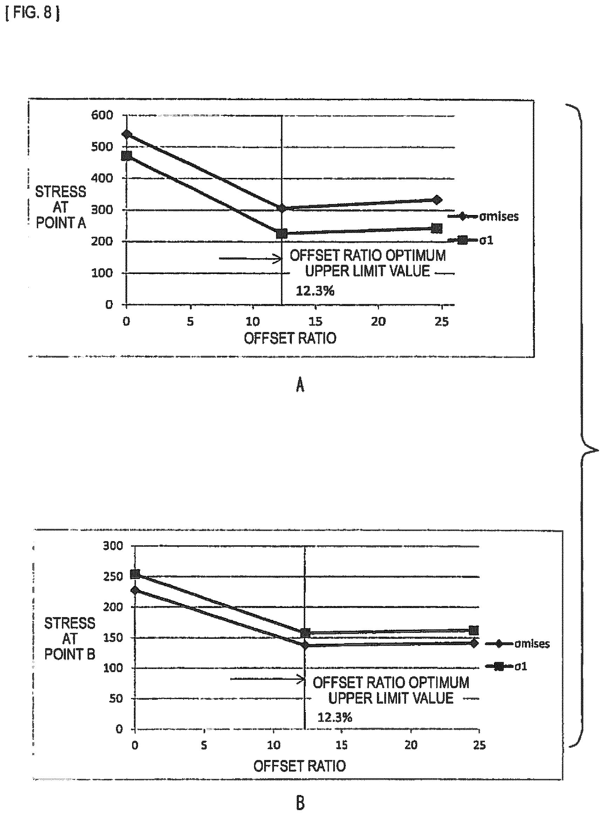

Fig. 8 shows a relationship between the offset ratio that is the ratio of the offset amount (L offset) to the outside diameter of the circularly cylindrical portion 2 and the stresses at the points A, B in Fig. 5. An optimum upper limit of the offset ratio at which the stresses at the points A, B become small becomes 12.3%.

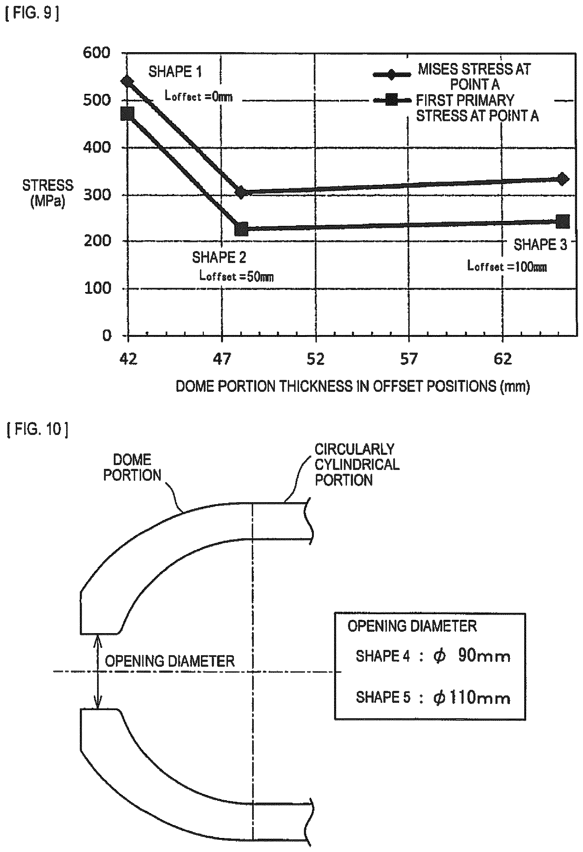

Fig. 9 shows a relationship between the dome portion thickness at the offset position and the stress at the point A.

The stress at the point A of the ferrule portion has a tendency as shown in Fig. 9 to decreases as the offset amount increases while starting to increase again when the offset amount becomes 50 mm or greater. Thus, a crack growth suppressing effect in hydrogen at the point A is provided for.

With this configuration (Shape 2 or Shape 3), however, since the opening diameter remains small to be φ38 mm, confirming whether or not wrinkle-like cracks are present inside the dome portion or at the ferrule portion or removing wrinkle-like cracks thereat through machining by a general method is not possible.

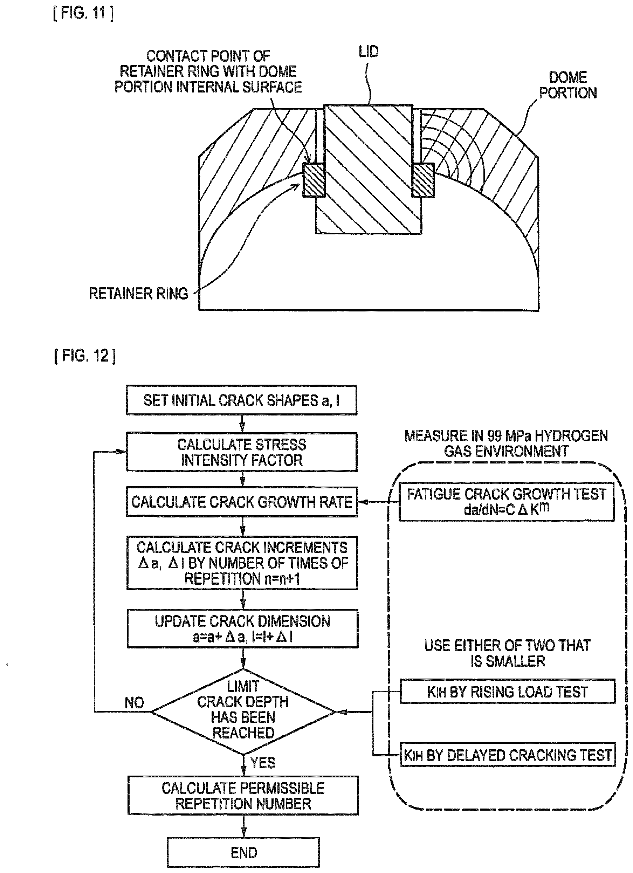

Then, removing the ferrule portion, a pressure vessel as shown in Fig. 11 is considered that has a structure in which a lid is held using a retainer ring method (NPL 5). In the pressure vessel having such a shape, an opening diameter is expanded to 90 mm or 110 mm in consideration of a required operation in removing wrinkle-like cracks on an internal surface of a dome portion or directly inspecting the internal surface of the dome portion for presence of wrinkle-like cracks. Fig.10 shows its analysis model. Here, a shape having an opening diameter of 90 mm is referred to as Shape 4, and a shape having an opening diameter of 110 mm is referred to as Shape 5.

In Shapes 4 and 5, a radius curvature of a dome portion inner circumferential curved surface 31 is 161 mm, and a radius of curvature of a dome portion outer circumferential curved surface 30 is 250 mm. A center of curvature of the dome portion inner circumferential curved surface 31 is situated on a center axis of a circularly cylindrical portion 2, and a center of curvature of the dome portion outer circumferential curved surface 30 is situated in a position that is situated 47 mm away in a radial direction from the center of curvature of the dome portion inner circumferential curved surface 31.

When having an opening portion that is expanded in the ways described above, a pressure bearing area is increased, whereby stress is also increased. However, cracks can be removed, and the internal surface of the dome portion can be inspected directly for cracks using a penetrant inspection method (PT) or a magnetic particle inspection method (MT). Thus, there will be no failure to detect even an extremely minute crack.

On the other hand, when an inspection for cracks can only carried out from the outside of the dome portion, whether or not a crack is present can be confirmed by using an ultrasonic inspection method (UT) (refer to, for example, Table 4). A minimum crack dimension that can be assumed in a fatigue crack analysis that takes a detection limit into consideration based on an ultra high-pressure pressure vessel design guideline (NPL 6) becomes, as shown in Table 4, 1.1 mm deep and not less than 3.3 mm long since a thickness of the circularly cylindrical portion 2 is 42 mm in this example.

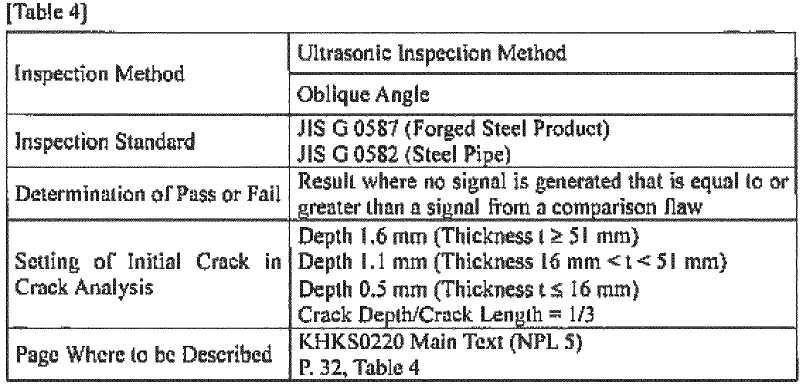

Minimum crack dimension that can be set in the fatigue crack growth analysis when the internal surface is inspected for cracks from outside using the ultrasonic inspection method.

On the other hand, when the internal surface can be inspected directly for cracks by increasing the opening diameter, according to NPL 6, in addition to the ultrasonic method, the magnetic method (MT) according to JIS Z 2320-1 to 3 and the penetrant method (PT) according to JIS Z 2343-1 to 4 can also be used as a method for inspection for cracks at the time of production. Consequently, when taking a detection limit for crack detection into consideration, a minimum crack dimension that can be assumed in a fatigue crack analysis can be smaller than that resulting when the UT method is used and can be set down to be 0.3 mm deep and of the order of 1.0 mm long.

Then, fatigue lives of Shapes 1, 2, 4, 5 are compared. An evaluation of fatigue life is executed using a fatigue crack life evaluation procedure shown in Fig. 12 that takes an effect of high pressure hydrogen gas environment into consideration based on the method specified under KHK S 0220 in NPL 6.

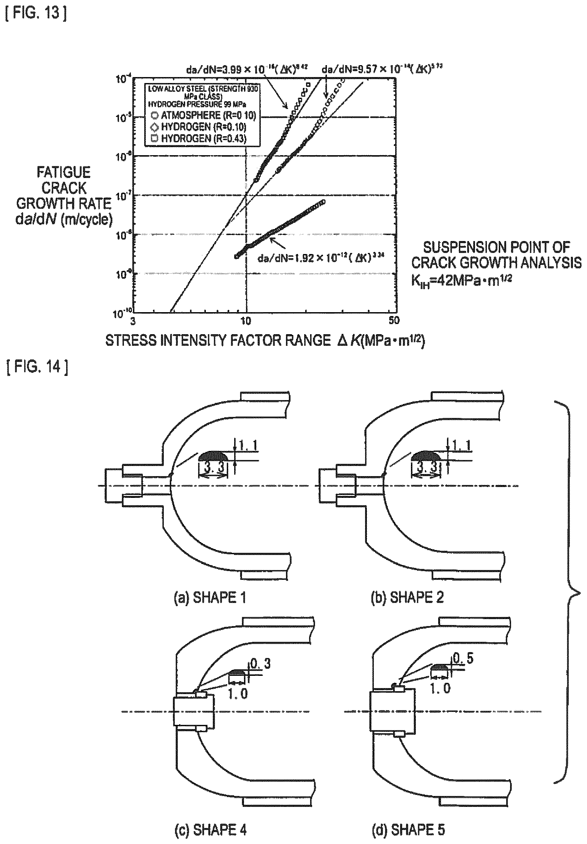

In this procedure, an initial crack shape a (= a depth of a crack on a surface) and 1 (= a length of a crack on a surface) are set, and a stress intensity factor is calculated. Following this, a crack growth rate is calculated. Liners used in this example are all made of low alloy steel whose tensile strength is of a 930 MPa class. A crack growth rate was calculated using the result of a fatigue crack growth test carried out under a 90 MPa hydrogen gas environment of the material shown in Fig. 13. A crack growth speed is calculated by executing a fatigue crack growth test under the 90 MPa hydrogen gas environment. In the crack growth test, da/dN denotes a crack growth rate, ΔK denotes a fluctuating range of the stress intensity factor during load repetition, and C, m denote constants.

After the crack growth rate is calculated, crack increments Δa, Δl by the number of times of repetition n = n + 1 are calculated, whereafter, the crack dimension is updated. Namely, a = a + Δa, l = 1 + Δl are calculated.

Next, whether or not a limit crack depth is reached is determined. The determination is executed by using KIH based on a rising load test or KIH based on a delay test.

If the limit crack depth is not reached, the procedure returns to the step of calculating the stress intensity factor, whereas if the limit crack depth is reached, a permissible number of times of repetition Nc is calculated, then, ending the procedure.

Fig. 13 shows in-hydrogen gas fatigue crack growth data (c, m, KIH) that is used to calculate the fatigue crack growth life shown in Fig. 12.

Fig. 14 shows assumed crack inserting positions in Shapes 1, 2, 4, 5. The crack inserting positions are dangerous points to which stress is concentrated most (the internal surface of the corner of the ferrule (the point A) in Shapes 1, 2, and the point where the retainer ring and the dome portion inner circumferential surface are brought into contact in Shapes 4, 5). In Shapes 4, 5, since the dome portion inner circumferential surface and the retainer ring are brought into contact with this point, and therefore, a contact stress is also taken into consideration.

Additionally, although no crack exists, metal brakes due to metal fatigue. Consequently, an in-hydrogen fatigue breaking life (Nf) with no crack is obtained from an in-hydrogen fatigue life curve shown in Fig. 15 to be compared with the permissible number of times of repetition that is calculated in advance based on the fatigue crack growth analysis, and either of the life and the permissible number of times of repetition which is smaller is selected as the life of the liner. Table 5 shows the results of the comparisons.

**[Table 5]**

| Comparison Examples of [n-Hydrogen Fatigue Life by Shapes of Ferrules | | | | |
|---|---|---|---|---|
| | Conventional (Shape 1) | Shape 2 | Shape 4 | Shape 5 |
| Accumulator Vessel Shape | With conventional neck | L Offset = 50 mm | L Offset = 5 mm | L Offset = 5 mm |
| | Opening Diameter φ38 mm | Opening Diameter φ38 mm | Opening Diameter φ90 mm | Opening Diameter φ110 mm |
| Application of MT or PT to Internal Surface Crack | Not Possible | Not Possible | Possible | Possible |
| Inspection Method for Crack at Time of Production | Ultrasonic inspection method (UT) from outside | Ultrasonic inspection method (UT) from outside | Magnetic particle inspection method (MT) from outside | Magnetic particle inspection method (MT) from outside |
| Minimum Crack Size (Depth/Length) Assumable Under Standard | Length 3.3 mm | Length 3.3 mm | Length 1.0 mm | Length 1.0 mm |
| | Depth 1.1 mm | Depth 1.1 mm | Depth 0.3 mm | Depth 0.5 mm |
| In-Hydrogen Life of Assumed Crack* | 0 time | 2000 times | Nᵣ = 530,000 times (N_{c} = 1,200,000 times) | Nᵣ = 15,000 times (N_{c} = 1,100,000 times) |
| Pₘₐₓ = 82 MPa | | | | |
| Pₘᵢₙ = 35 MPa | | | | |

The results of the comparisons conclude that it is Shape 4 having an opening portion 4 of φ90 mm that can attain 300 thousand times of loading of hydrogen that should be executed when a hydrogen station is kept operating for 15 years. With Shape 5 having an opening portion 4 of φ110 mm that is too large, a pressure bearing portion has to bear a great load, whereby the fatigue life cannot be attained. Consequently, it is desirable that the opening diameter is set at φ90 mm at the most.

On the other hand, as to a lower limit value of the opening diameter, NPL 7 shows an example of inspecting an internal surface using the penetrant method. In consideration of conveniences in inserting a required tool for inspection (application or atomization of liquid medicine, a washing liquid injection nozzle, a CCD camera and the like), the opening diameter should be of the order of φ70 mm. Consequently, it is considered reasonable that the lower limit value of the opening diameter is φ70 mm.

In the example, with the inside diameter of the circularly cylindrical portion being φ322.4 mm, the maximum limit value of the opening diameter is φ90 mm. When considering inside diameters of various circularly cylindrical portions, it is desirable from the example that a ratio of the opening diameter to the inside diameter of the circular cylindrical portion (the inside diameter of the circularly cylindrical portion/the opening diameter) is 3.6 or smaller.

The invention is not limited to the embodiment described above and hence can be modified or improved variously as required. In addition, the materials, shapes, dimensions, numerical values, forms, numbers, locations and the like of the constituent elements of the embodiment of the invention are arbitrary and are not limited to those described above, provided that the invention can be attained by them.

While the invention has been described in detail or by reference to the specific mode, it is obvious to those skilled in the art to which the invention pertains that various alterations or modifications can be made thereto without departing from the spirit and scope of the invention.

This patent application is based on Japanese Patent Application No. (2016-039473) filed on March 1, 2016, the contents of which are incorporated herein by reference.

Here, the characteristics of the pressure vessel and the hoop wrapped composite pressure vessel according to the embodiment of the invention will be summarized altogether item by item under [1] to [14] below.
[1] A pressure vessel (1) in which a fiber reinforced plastic is wound like a hoop around a vessel main body (2) having a circularly cylindrical portion that is closed at both the ends thereof, the pressure vessel comprising:
   a dome portion (3) provided to at least one end of the vessel main body,
   wherein the dome portion (3) has a thickness that is greater than a thickness of the circularly cylindrical portion, and
   wherein the dome portion (3) has a shape in which an outer circumferential curved surface initiating point (30A) that is situated axially outwards of an external diametrical surface (20) of the vessel main body (2) that is flat in an axial direction is offset further axially outwards than an inner circumferential curved surface initiating point (31A) that is situated axially outwards of an internal diametrical surface (21) of the vessel main body (2) that is flat in the axial direction.
[2] The pressure vessel (1) according to [1] above, wherein the dome portion (3) has a thickness increasing area where the thickness of the dome portion increases axially outwards from the inner circumferential curved surface initiating point (31A).
[3] The pressure vessel (1) according to [2] above, wherein the thickness increasing area exists within at least an angular range defined from 90 degrees to 45 degrees relative to an axial direction in an axially curved surface shape of an inner circumferential surface (31).
[4] The pressure vessel (1) according to any one of [1] to [3] above, wherein an amount of the offset is at least 3% or more of an outside diameter of the circularly cylindrical portion.
[5] The pressure vessel (1) according to any one of [1] to [4] above, wherein an amount of the offset is equal to or less than 12.3% of an outside diameter of the circularly cylindrical portion.
[6] The pressure vessel (1) according to any one of [1] to [5] above,
   wherein the dome portion has an opening portion (4) at a distal end thereof in the axial direction, and
   wherein the opening portion (4) has the diameter of 70 mm or greater.
[7] The pressure vessel (1) according to any one of [1] to [6] above,
   wherein the dome portion (3) has an opening portion (4) at a distal end thereof in the axial direction,
   wherein the opening portion (4) has a diameter of 90 mm or smaller, and
   wherein a ratio of the opening portion (4) to a diameter of an internal diametrical surface (21) of the vessel main body (2) that is flat in the axial direction is 3.6 or smaller.
[8] The pressure vessel (1) according to any one of [1] to [7] above, wherein the external diametrical surface (the outer circumferential curved surface 30) of the dome portion (3) is not positioned further outer circumferentially than an external diametrical surface (20) of the vessel main body (2) that is flat in the axial direction.
[9] The pressure vessel (1) according to any one of [1] to [8] above, wherein the external diametrical surface (20) of the vessel main body (2) that is flat in the axial direction is within a tolerance range of □ 0.1 mm.
[10] The pressure vessel (1) according to any one of [1] to [9] above, wherein the circularly cylindrical portion of the vessel main body (2) is a seamless steel pipe.
[11] The pressure vessel (1) according to any one of [1] to [10] above, comprising an opening portion (4) that has no ferrule portion at a distal end of the dome portion (3),
   wherein an openable and closable lid is held in the opening portion (4) with a removable retainer ring.
[12] A hoop wrapped composite pressure vessel(1A) in which the fiber reinforced plastic (FRP 10) is wound like a hoop around the external diametrical surface (20) of the vessel main body (2) according to any one of [1] to [11] above that is flat in the axial direction,
   wherein an axial end edge of the fiber reinforced plastic (10) exceeds the inner circumferential curved surface initiating point (31A) to be positioned on the outer circumferential surface (the external diametrical surface 32 of the dome portion that is flat in the axial direction) that is positioned before the outer circumferential curved surface initiating point (30A) and which extends along the external diametrical surface (20) of the vessel main body (2) that is flat in the axial direction.
[13] The hoop wrapped composite pressure vessel (1A) according to [12] above, wherein the axial end edge of the fiber reinforced plastic (10) is positioned 1 mm or greater axially inwards of the outer circumferential curved surface initiating point.
[14] The hoop wrapped composite pressure vessel (1A) according to [12] or [13] above, having a durability to withstand 500 thousand times or more of repeated application of a load under repeated pressure fluctuating conditions in a high pressure hydrogen having a maximum pressure of 82 MPa and a minimum pressure of 35 MPa on the premise that a crack of a linear length of 1.0 mm or smaller and a depth of 0.3 mm or smaller exists on an internal surface of the dome portion (3).

### Industrial Applicability

According to the invention, in the hoop wrapped composite pressure vessel, it is possible to provide the pressure vessel that facilitates the improvement in strength of the dome portion and the winding of the FRP therearound and the hoop wrapped composite pressure vessel in which the strength of the dome potion is increased to the high level and the FRP is wound therearound properly. The invention having such an effect is useful in the field of a pressure vessel and a hoop wrapped composite pressure vessel.

### Reference Signs List

1: Pressure vessel
1A: Hoop wrapped composite pressure vessel
2: Circularly cylindrical portion
3: Dome portion
4: Opening portion
10: FRP
20: External diametrical surface of circularly cylindrical portion that is flat in axial direction
21: Internal diametrical surface of circularly cylindrical portion that is flat in axial direction
30: Dome portion outer circumferential curved surface
30A: Outer circumferential curved surface initiating point
31: Dome portion inner circumferential curved surface
31A: Inner circumferential curved surface initiating point
32: External diametrical surface of dome portion that is flat in axial direction.

## Claims

1. A pressure vessel in which a fiber reinforced plastic is wound like a hoop around a vessel main body having a circularly cylindrical portion that is closed at both ends thereof, the pressure vessel comprising:
a dome portion provided to at least one end of the vessel main body,
wherein the dome portion has a thickness that is greater than a thickness of the circularly cylindrical portion, and
wherein the dome portion has a shape in which an outer circumferential curved surface initiating point that is situated axially outwards of an external diametrical surface of the vessel main body that is flat in an axial direction is offset further axially outwards than an inner circumferential curved surface initiating point that is situated axially outwards of an internal diametrical surface of the vessel main body that is flat in the axial direction.

2. The pressure vessel according to claim 1, wherein the dome portion has a thickness increasing area where the thickness of the dome portion increases axially outwards from the inner circumferential curved surface initiating point.

3. The pressure vessel according to claim 2, wherein the thickness increasing area exists at least within an angular range defined from 90 degrees to 45 degrees relative to an axial direction in an axially curved surface shape of an inner circumferential surface.

4. The pressure vessel according to any one of claims 1 to 3, wherein an amount of the offset is at least 3% or more of an outside diameter of the circularly cylindrical portion.

5. The pressure vessel according to any one of claims 1 to 4, wherein an amount of the offset is equal to or less than 12.3% of an outside diameter οf the circularly cylindrical portion.

6. The pressure vessel according to any one of claims 1 to 5,
wherein the dome portion has an opening portion at a distal end thereof in the axial direction, and
wherein the opening portion has a diameter of 70 mm or greater.

7. The pressure vessel according to any one of claims I to 6,
wherein the dome portion has an opening portion at a distal end thereof in the axial direction,
wherein the opening portion has a diameter of 90 mm or smaller, and wherein a ratio of the opening portion to a diameter of an internal diametrical surface of the vessel main body that is flat in the axial direction is 3,6 or smaller.

8. The pressure vessel according to any one of claims 1 to 7, wherein an external diametrical surface of the dome portion is not positioned further outer circumferentially than an external diametrical surface of the vessel main body that is flat in the axial direction.

9. The pressure vessel according to any one of claims 1 to 8, wherein the external diametrical surface of the vessel main body that is flat in the axial direction is within a tolerance range of ± 0.1 mm.

10. The pressure vessel according to any one of claims 1 to 9, wherein the circularly cylindrical portion of the vessel main body is a seamless steel pipe.

11. The pressure vessel according to any one of claims 1 to 10, comprising an opening portion that has no ferrule portion at a distal end of the dome portion,
wherein an openable and closable lid is held in the opening portion with a removable retainer ring.

12. A hoop wrapped composite pressure vessel in which the fiber reinforced plastic is wound like a hoop around the external diametrical surface of the vessel main body according to any one of claims 1 to 11 that is flat in the axial direction, and
wherein an axial end edge of the fiber reinforced plastic exceeds the inner circumferential curved surface initiating point to be positioned on an outer circumferential surface that is positioned before the outer circumferential curved surface initiating point and which extends along the external diametrical surface of the vessel main body that is flat in the axial direction.

13. The hoop wrapped composite pressure vessel according to claim 12, wherein the axial end edge of the fiber reinforced plastic is positioned 1 mm or greater axially inwards of the outer circumferential curved surface initiating point.

14. The hoop wrapped composite pressure vessel according to claim 12 or 13, having a durability to withstand 500 thousand times or more of repeated application of a load under repeated pressure fluctuating conditions in a high pressure hydrogen having a maximum pressure of 82 MPa and a minimum pressure of 35 MPa on the premise that a crack of a linear length of 1.0 mm or smaller and a depth of 0.3 mm or smaller exists on an internal surface of the dome portion.
